# EUROPEAN PATENT SPECIFICATION

(11) **EP 2 899 926 B1**
(45) Date of publication and mention of the grant of the patent: **29.11.2017**
(21) Application number: 14754402.7
(22) Date of filing: 23.01.2014
(51) Int. Cl.: H04L 12/70, H04L 12/935, H04L 12/931, H04L 12/46, H04L 12/26

(54) **METHOD FOR IMPLEMENTING PACKET SEARCHING BY USING TWO SLIDING WINDOWS**
VERFAHREN ZUR IMPLEMENTIERUNG VON PAKETSUCHE ANHAND DER VERWENDUNG VON ZWEI SCHIEBEFENSTERN
PROCÉDÉ DE MISE EN UVRE DE RECHERCHE DE PAQUETS À L'AIDE DE DEUX FENÊTRES DYNAMIQUES

(30) Priority: 20.02.2013 CN 201310053862
(43) Date of publication of application: 29.07.2015
(73) Proprietor: Inspur Electronic Information Industry Co., Ltd., Jinan City, Shandong 250014 (CN)
(72) Inventor: WANG, Endong, Jinan Shandong 250014 (CN); HU, Leijun, Jinan Shandong 250014 (CN); LI, Rengang, Jinan Shandong 250014 (CN)
(74) Representative: Schmid, Nils T.F.
(86) International application number: PCT/CN2014/071221
(87) International publication number: WO 2014/127693

(56) References cited:
- WO-A1-01/28146
- WO-A1-01/78235
- WO-A2-2007/024370
- CN-A- 1 798 099
- CN-A- 1 819 560
- CN-A- 103 117 922
- US-A1- 2007 025 470
- User Guide: "Printed Circuit Board (PCB) Test Methodology", , 1 January 2000 (2000-01-01), XP55306791, Retrieved from the Internet: URL:http://download.intel.com/design/chips ets/applnots/29817901.pdf [retrieved on 2016-09-30]

## Description

### TECHNICAL FIELD OF THE INVENTION

The disclosure herein relates to the field of high-end server design and the field of large-scale integrated circuit design, and in particular, to a method of implementing packet search by double sliding windows.

### BACKGROUND

Along with rapid development of computer technologies and integrated circuit technologies, in order to meet requirements of economic and social development, high-end server systems become one of bottlenecks in key fields restraining social development. Information fields such as enormous data calculation and data analysis, complicated graphical analysis, and scientific computation have extremely high requirements on performance of a computer system. Therefore, it is required to construct a huge high-end server system to better adapt to application requirements of various current fields. However, on the other hand, a technical problem of high-speed interconnection packet transmission is also encountered, and in a high-speed interconnection interface, transmission differences caused by trace delay and transmission consistency difference of multi-channel transmission all influence stability and execution efficiency of the system. Therefore, adopting a reasonable implementation manner and controlling a transmission characteristic of a link so as to enable a packet transmission method to meet a transmission characteristic of a specific link is one of effective methods for implementing stable transmission of a high-speed interconnection interface in a high-end server system.

US 2007/0025470 A1 shows a system and method for detecting known sequence in transmitted sequence. A known sequence of symbols is located within a transmitted sequence of symbols by estimating the phase differences between offset symbols within a portion or more of the transmitted sequence, estimating the phase differences between offset symbols in the known sequence, and determining that the symbols within the portion or more of the transmitted sequence are the known sequence if the phase difference estimates determined from the symbols within the portion or more of the transmitted sequence are substantially equal to the phase difference estimates determined from the known sequence.

The User Guide "Printed Circuit Board (PCB) Test Methodology" by Intel, showing a date of January 2000, details the measurement procedures and techniques necessary to accurately characterize Printed Circuit Board (PCB) trace impedance and propagation velocity. By using the methodologies described in this User Guide, PCB suppliers and customers may expect to have significantly better correlation on the key PCB electrical parameters that affect high-speed digital bus designs.

### SUMMARY

Embodiments of method of implementing packet search by double sliding windows are provided. The invention is defined by the subject matter of the independent claims. Advantageous embodiments are set out by the dependent claim and will be outlined herein below.

One implementation may include the following: a three-level barrel shift register is used to store input packet data, a position of a sliding window 1 is determined at 32 positions by primary testing of a link, so as to ensure that the packet data is located at the center of the sliding window 1, thereby ensuring that the position of the sliding window 1 meets a transmission characteristic of a specific link to the maximum extent. After the position of the sliding window 1 is determined, 32-bit packet data can be effectively searched in the sliding window 1 by a dynamical adjustment manner of a sliding window 2, and 32-bit transmission offset is allowed for the packet data. A system structure used for the method of implementing packet search by double sliding windows includes: (1) a first-level sliding window, and (2) a second-level sliding window, wherein:
the first-level sliding window refers to that: according to a design specification and a transmission characteristic requirement of a physical link, transmission performance thereof is analyzed, and a specific position of the first-level sliding window is determined by primary testing, so that the packet data is located at the center of the sliding window 1, thereby ensuring that the first-level sliding window meets the transmission characteristic of the specific link to the maximum extent, and different first-level sliding windows are allowed for different transmission links because of their different trace delays;
the second-level sliding window refers to that: on the basis of the determined first-level sliding window, a specific position of the packet data is searched for by dynamically adjusting in the range of the first-level sliding window through the second-level sliding window, wherein the allowed maximum offset of the packet data is 32 bits; packet search is performed by using double sliding windows, thereby implementing reliable and stable high-speed link packet transmission; transmission characteristic management on every transmission link can be performed by the first-level sliding window, enabling the position of the first-level sliding window to meet every transmission link, enabling a transmission characteristic of every link to be matched with a different sliding window, thereby ensuring the efficiency and stability of the link transmission to the maximum extent; because the position of the first-level sliding window is set to enable the packet data to be located at the center thereof, the dynamic adjustment of the second-level sliding window is ensured more reliably, thereby improving consistency of multi-channel packet transmission.

Because of structure features of high-speed transmission link interfaces and design features of high-speed interconnection protocols, as well as transmission influence brought about by high-speed link transmission trace delay and inconsistency of multi-channel packet transmission, the position of the first-level sliding window is determined by using evaluation and prediction, so as to faintly ensure that the packet data is located at the center of the first-level sliding window; moreover, positions of first-level sliding windows in different channels of the multi-channel system may be different, thereby implementing a close match between the sliding window structure and the transmission link characteristic.

The embodiment of the disclosure herein has the following beneficial effects: the method of implementing packet search by double sliding windows improves stability of high-speed link packet transmission and consistency of multi-channel packet transmission, thereby having a high technical value and application value in the fields of high-speed interconnection interface logic or protocol implementation.

### BRIEF DESCRIPTION OF THE DRAWINGS

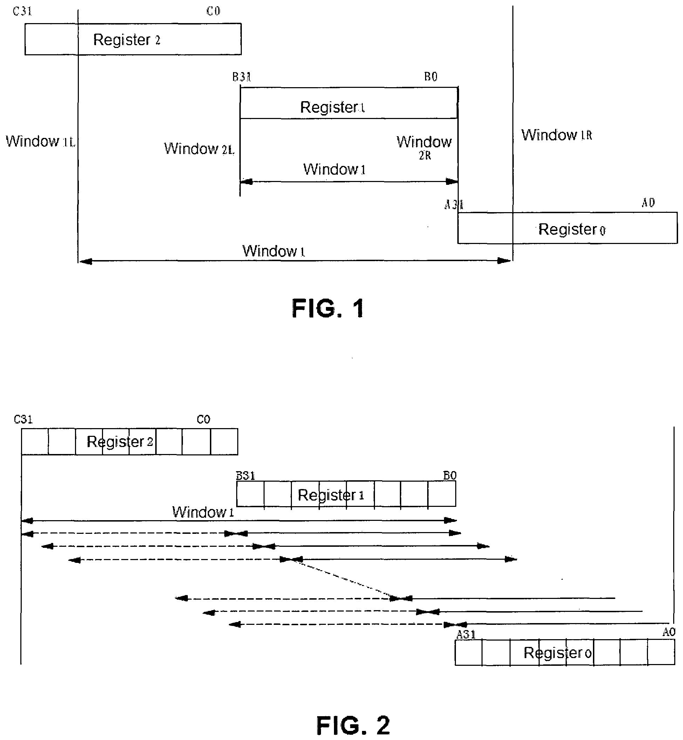

- FIG. 1: is a schematic diagram of a two-level sliding window structure;
- FIG. 2: is a schematic diagram of a first-level sliding window structure;

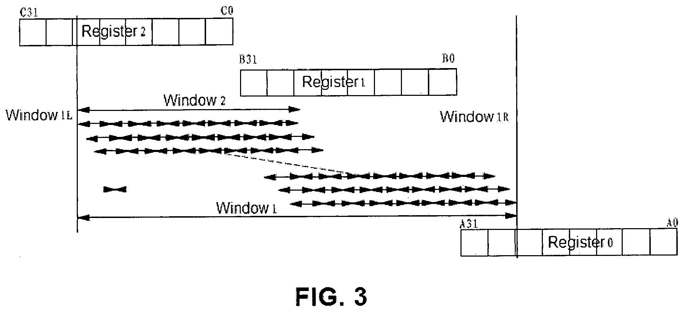

- FIG. 3: is a schematic diagram of a second-level sliding window structure.

### DETAILED DESCRIPTION

The method of the disclosure herein is described in detail in the following with reference to the accompanying drawings.

Characteristics of a first-level sliding window implementation structure mainly refers to that: according to a design specification and a transmission characteristic requirement of a physical link, transmission performance thereof is analyzed, and a specific position of the first-level sliding window is determined by primary testing, so that packet data is located at the center of the sliding window 1, thereby ensuring that the first-level sliding window meets the transmission characteristic of a specific link to the maximum extent, and first-level sliding windows may be different for different transmission links because of their different trace delays. Characteristics of a second-level sliding window implementation structure mainly refers to that: on the basis of the determined first-level sliding window, a specific position of the packet data may be searched for by dynamically adjusting in the range of the first-level sliding window through the second-level sliding window, where the allowed maximum offset of the packet data is 32 bits. The method of implementing packet search by double sliding windows implements reliable and stable high-speed link packet transmission. Transmission characteristic management on every transmission link can be performed by the first-level sliding window, enabling the position of the first-level sliding window to meet every transmission link, enabling a transmission characteristic of every link to be matched with a different sliding window, thereby ensuring the efficiency and stability of the link transmission to the maximum extent. The position for packet search may be dynamically adjusted by using the second-level sliding window, where the allowed transmission offset of the packet does not exceed 32 bits, and because the position of the first-level sliding window is set to enable the packet data to be located at the center thereof, the dynamic adjustment of the second-level sliding window is ensured more reliably.

As described in the summary of the disclosure, an implementation structure for the method of implementing packet search by double sliding windows in the disclosure herein mainly includes: a first-level sliding window implementation structure (1), and a second-level sliding window implementation structure (2).

After external 32-bit packet data is input to the double sliding window module, the packet data passes through three barrel shift registers reg0, reg1 and reg2, where the barrel shift registers each have a bit width of 32 bits and a depth of 32. A sliding window 1 may slide from B0-C31 to A0-B31, totally 32 bits. According to rules and characteristics of hardware physical design, or according to a result analysis of hardware test, a characteristic of each transmission channel is determined, so as to determine a specific position of the sliding window 1. For example, when the 32-bit packet data falls in reg1[18]-reg2[17] due to trace delay, the sliding window 1 may be placed at the position B0-C31, so that the packet data is located at the center of the sliding window; when the 32-bit packet data falls in reg0[30]-reg2[29], the sliding window 1 may be placed at the position A14-C13, so that the packet data is located at the center of the sliding window; and when the 32-bit packet data falls in reg1[8]-reg2[7], the sliding window 1 may be placed at the position A24-C23, so that the packet data is located at the center of the sliding window.

After the position of the sliding window 1 is determined, for example, the sliding window 1 is located at the position A24-C23, a sliding window 2 may slide from B28-C27 to A28-B27, totally 32 bits, and a packet may be searched for effectively in this interval according to the specific position of packet search during transmission.

Except the technical features described in the specification, others are all well-known technologies for persons skilled in the art.

## Claims

1. A method comprising the steps of:
using a first sliding window to search packet data;
**characterized by**
storing an input packet data having 32 bits that has been received via a high-speed physical transmission link in a concatenation of three barrel shift registers, each of the three barrel shift register having a widths of 32 bits;
performing primary testing of a trace delay on the physical transmission link;
determining a position of a second sliding window having a width of 64 bits based on the trace delay obtained by said primary testing of the physical transmission link, so that input packet data stored in said three barrel shift registers is located at the center of the second sliding window, thereby ensuring that the position of the second sliding window meets a trace delay of the physical transmission link;
after having determined the position of the second sliding window, searching the packet data within the second sliding window using the first sliding window having a width of 32 bits that is dynamically slid across the second sliding window, wherein the maximum allowed offset of the packet data is 32 bits.

2. The method according to claim 1, further comprising:
storing another input packet data having 32 bits that has been received via another physical transmission link in a concatenation of another three barrel shift registers, each of the other three barrel shift register having a widths of 32 bits;
performing primary testing of a trace delay on the other physical transmission link;
determining a position of a another second sliding window having a width of 64 bits based on the trace delay obtained by said primary testing of the other physical transmission link, so that the other input packet data stored in said three other barrel shift registers is located at the center of the other second sliding window, thereby ensuring that the position of the other second sliding window meets a trace delay of the other physical transmission link;
after having determined the position of the other second sliding window, searching other packet data within the other second sliding window using another first sliding window having a width of 32 bits that is dynamically slid across the other second sliding window, wherein the maximum allowed offset of the other packet data is 32 bits.

3. A server system comprising means adapted to perform the method of claim 1 or 2.

## Patentansprüche

1. Verfahren, das die folgenden Schritte aufweist:
Verwenden eines ersten Schiebefensters, um Paketdaten zu durchsuchen;
**gekennzeichnet durch**
Speichern von Eingangspaketdaten mit 32 Bit, die über eine physikalische High-Speed-Übertragungsstrecke in einer Aneinanderreihung von drei Barrel-Shift-Registern empfangen wurden, wobei jedes der drei Barrel-Shift-Register eine Breite von 32 Bit aufweist;
Durchführen von Primärprüfung einer Signallaufzeit auf der physikalischen Übertragungsstrecke;
Bestimmen einer Position eines zweiten Schiebefensters mit einer Breite von 64 Bit, basierend auf der Signallaufzeit, die durch die Primärprüfung der physikalischen Übertragungsstrecke erhalten wurde, derart dass sich die Eingangspaketdaten, die in den drei Barrel-Shift-Registern gespeichert sind, in der Mitte des zweiten Schiebefensters befinden, wodurch sichergestellt wird, dass die Position des zweiten Schiebefensters mit einer Signallaufzeit der physikalischen Übertragungsstrecke übereinstimmt;
nach Bestimmen der Position des zweiten Schiebefensters, Durchsuchen der Paketdaten in dem zweiten Schiebefenster unter Verwendung des ersten Schiebefensters mit einer Breite von 32 Bit, das dynamisch über das zweite Schiebefenster geschoben wird, wobei das maximal zulässige Offset der Paketdaten 32 Bit beträgt.

2. Verfahren nach Anspruch 1, das ferner Folgendes aufweist:
Speichern weiterer Eingangspaketdaten mit 32 Bit, die über eine weitere physikalische Übertragungsstrecke in einer Aneinanderreihung von drei Barrel-Shift-Registern empfangen wurden, wobei jedes der drei Barrel-Shift-Register eine Breite von 32 Bit aufweist;
Durchführen von Primärprüfung einer Signallaufzeit auf der weiteren physikalischen Übertragungsstrecke;
Bestimmen einer Position eines weiteren zweiten Schiebefensters mit einer Breite von 64 Bit, basierend auf der Signallaufzeit, die durch die Primärprüfung der weiteren physikalischen Übertragungsstrecke erhalten wurde, derart dass sich die weiteren Eingangspaketdaten, die in den drei Barrel-Shift-Registern gespeichert sind, in der Mitte des weiteren zweiten Schiebefensters befinden, wodurch sichergestellt wird, dass die Position des weiteren zweiten Schiebefensters mit einer Signallaufzeit der weiteren physikalischen Übertragungsstrecke übereinstimmt;
nach Bestimmen der Position des weiteren zweiten Schiebefensters, Durchsuchen der weiteren Paketdaten in dem weiteren zweiten Schiebefenster unter Verwendung eines weiteren ersten Schiebefensters mit einer Breite von 32 Bit, das dynamisch über das weitere zweite Schiebefenster geschoben wird, wobei das maximal zulässige Offset der weiteren Paketdaten 32 Bit beträgt.

3. Serversystem, das Mittel aufweist, um das Verfahren gemäß Anspruch 1 oder 2 durchzuführen.

## Revendications

1. Procédé comportant l'étape ci-dessous consistant à :
utiliser une première fenêtre dynamique en vue de rechercher des données de paquet ;
**caractérisé par** les étapes ci-dessous consistant à :
stocker des données de paquet d'entrée présentant 32 bits qui ont été reçues par le biais d'une liaison de transmission physique haut débit dans une concaténation de trois registres à décalage à barillet, chacun des trois registres à décalage à barillet présentant une largeur de 32 bits ;
mettre en oeuvre un test principal d'un retard de trace sur la liaison de transmission physique ;
déterminer une position d'une seconde fenêtre dynamique présentant une largeur de 64 bits, sur la base du retard de trace obtenu par ledit test principal de la liaison de transmission physique, de sorte que des données de paquet d'entrée stockées dans lesdits trois registres à décalage à barillet sont situées au centre de la seconde fenêtre dynamique, ce qui permet de garantir par conséquent que la position de la seconde fenêtre dynamique satisfait un retard de trace de la liaison de transmission physique ;
une fois la position de la seconde fenêtre dynamique déterminée, rechercher les données de paquet au sein de la seconde fenêtre dynamique, en utilisant la première fenêtre dynamique présentant une largeur de 32 bits qui est coulissée dynamiquement à travers la seconde fenêtre dynamique, dans lequel le décalage autorisé maximal des données de paquet est de 32 bits.

2. Procédé selon la revendication 1, comprenant en outre les étapes ci-dessous consistant à
stocker d'autres données de paquet d'entrée présentant 32 bits qui ont été reçues par le biais d'une autre liaison de transmission physique dans une concaténation de trois autres registres à décalage à barillet, chacun des trois autres registres à décalage à barillet présentant une largeur de 32 bits ;
mettre en oeuvre un test principal d'un retard de trace sur l'autre liaison de transmission physique ;
déterminer une position d'une autre seconde fenêtre dynamique présentant une largeur de 64 bits, sur la base du retard de trace obtenu par ledit test principal de l'autre liaison de transmission physique, de sorte que les autres données de paquet d'entrée stockées dans lesdits trois autres registres à décalage à barillet sont situées au centre de l'autre seconde fenêtre dynamique, ce qui permet de garantir par conséquent que la position de l'autre seconde fenêtre dynamique satisfait un retard de trace de l'autre liaison de transmission physique ;
une fois la position de l'autre seconde fenêtre dynamique déterminée, rechercher d'autres données de paquet au sein de l'autre seconde fenêtre dynamique en utilisant une autre première fenêtre dynamique présentant une largeur de 32 bits qui est dynamiquement coulissée à travers l'autre seconde fenêtre dynamique, dans lequel le décalage autorisé maximal des autres données de paquet est de 32 bits.

3. Système de serveur comportant des moyens aptes à mettre en oeuvre le procédé selon la revendication 1 ou 2.
